# EUROPEAN PATENT SPECIFICATION

(11) **EP 3 165 672 B1**
(45) Date of publication and mention of the grant of the patent: **25.04.2018**
(21) Application number: 16197279.9
(22) Date of filing: 04.11.2016
(51) Int. Cl.: D21D 5/24, B04C 5/085, D21F 1/62

(54) **SAND SEPARATOR VESSEL AND PERFORATED REPLACEABLE INSERT**
SANDABSCHEIDERGEFÄSS UND PERFORIERTE AUSTAUSCHBARE EINSATZVORRICHTUNG
APPAREIL ET INSERT PERFORÉ REMPLAÇABLE DE CUVE DE SÉPARATEUR DE SABLE

(30) Priority: 05.11.2015 US 201562251302 P; 28.10.2016 US 201615337247
(43) Date of publication of application: 10.05.2017
(73) Proprietor: ANDRITZ INC., Glens Falls, NY 12801 (US)
(72) Inventor: Hunt, Tyson Bradford, Saratoga Spring, NY New York 12866 (US); Garbaccio, Alexandre David Rua Carlos, 80420-010 Curitiba (BR)
(74) Representative: Hoffmann Eitle

(56) References cited:
- WO-A1-98/18559
- US-A- 4 280 902
- US-A1- 2003 201 213

## Description

### BACKGROUND OF THE INVENTION

Aspects of the disclosure relate generally to problems caused by separating and removing harmful material, such as but not limited to sand, in the fiber line of a chemical pulp mill during production of chemical pulp. Specifically, equipment and methods to remove sand from the recirculation liquor of the fiber line (digester) feed system are disclosed.

Comminuted cellulosic fiber material treated in a conventional pulp production process, e.g. wood chips, biomass, or other comminuted cellulosic material (for convenience referred to here as "chips") typically contain non-cellulosic harmful material. The non-cellulosic harmful material includes sand, dirt, stones, different pieces of metal, (e.g. nails, pieces of metal wire, or bolts and nuts), chips of metal, or other heavy cellulosic materials (*e.g.* knots). The density of this non-cellulosic harmful material is typically at least 10% higher than the density of the cellulosic material being treated (e.g. at least 50% higher). Much of this non-cellulosic harmful material can be removed during the process of producing the chips for feeding to the pulping process, but part of the non-cellulosic harmful material will be passed into the digester feed system, to an optional impregnation vessel, and to the digester itself.

In many existing digester feed systems, smaller non-cellulosic harmful material such as sand, dirt, stones, etc., remain with the recirculation liquor used within the digester feed system. For simplicity purposes, the term "sand" is used throughout this document to mean smaller non-cellulosic harmful material previously identified. The recirculation liquor (for convenience referred to here as "liquor") typically is used as transport liquor in digester feed systems having low pressure feeders, high pressure feeders, chip pumps, slurry pumps, or similar equipment where liquor may be needed.

Liquor within the digester feed system may have many functions and many sources. For clarity purposes, "entrained liquor" in this disclosure refers to liquor fed to the sand separator vessel and contains sand and even other solid particles.

The liquor is recirculated within the digester feed system to assist or improve the transport of chips in the digester feed system. Liquor may be any suitable sort of liquid, including but not limited to fresh water, fresh cooking liquor, black liquor, green liquor, recirculated liquor, cooking solution, or any combination thereof.

Usually sand is separated from the liquor in the digester feed system by means of some sort of separator. A conventional sand separator vessel removes sand and other solid particles from the entrained liquor circulated via a chip conveyor arrangement at the digester plant. U.S. Pat. No. 4,280,902, on which the preambles of claims 1 and 10 are based, describes a cyclone-type sand separating device for removing undesirable solid particles, especially sand, from the debris-laden, or entrained liquor. Removal of solid particles, particularly sand, from the entrained liquor results in an essentially sand free (cleaned) liquor. The essentially sand free (cleaned) liquor may then be returned and become a part of the liquor of the digester feed system. For simplicity, the solid particles removed from the entrained liquor will be referred to as "sand," although other undesirable solid particles may also be present.

Related sand separator vessels are known from US-A1-2003/201213 and WO-A1-98/18559.

A sand separator vessel typically is generally cylindrical in shape, typically with an upper section and a lower section, and comprises a tangential inlet into a cylindrical container. The cylindrical container is generally comprised of an upper section, generally having a cylindrical shape, and a lower section, generally having a cone or conical shape. In this document the upper section of the cylindrical container may also be referred to as a "cylindrical portion." In such devices, the debris laden liquor is introduced into an upper section of the cylindrical container, and a forceful whirling motion is generated within the cylindrical portion. Sand, separated out of the entrained liquor and driven by gravitational and centrifugal forces, is forced downward in the cylindrical portion into a lower section, which may be a separating chamber, usually having a conical shape. From the lower section or separating chamber, the sand is discharged.

Within the lower section or separating chamber is located a funnel-shaped replaceable insert. For simplicity, in this application the term "replaceable insert" and "insert" may be used interchangeably. The replaceable insert has openings to allow sand to pass through the replaceable insert into the solid particle collection region (collection region) and ultimately out of the sand separator vessel.

The location of the replaceable insert within the sand separator vessel is at a level to prevent vertical stagnation of sand while having minimal disruption of the whirling motion. An outlet for the essentially sand-free (cleaned) liquor is located in the upper part of the cylindrical portion.

Typically, replaceable inserts are perforated metal pieces shaped like a funnel. The perforations may be vertical slots or circular holes and may extend the entire surface of the replaceable insert. Replaceable inserts are attached to the inner wall of the lower section of the sand separator vessel (within the separating chamber). As the entrained liquor enters the sand separator vessel, the whirling motion within the sand separator vessel separates the liquid and solid particles (sand) within the entrained liquor. Sand moves downward to the lower section, resulting in a strong whirling flow with complex flow patterns through the openings in the replaceable insert and eventually out a discharge of the sand separator vessel.

The replaceable insert is typically conical (or funnel) in shape with a large opening at one end and a small opening at the opposite end. Generally the replaceable insert is attached at the large opening end to the interior wall of the sand separator vessel in the vertically lower region of the sand separator vessel. A rigid attachment is typically used to connect the replaceable insert to the interior wall of the sand separator vessel.

Several adverse operational conditions have been identified with the sand separator vessel. As a result of the whirling motion and centrifugal and gravitational forces needed to separate the sand from entrained liquor, replaceable inserts become damaged and can collapse in on themselves. Additionally, uneven wear of the replaceable insert is experienced.

Uneven wear results in some sections of the replaceable insert being completely absent while other sections remain intact. Where the replaceable insert is worn through (or absent), sand may violently contact the collection region wall on the interior of the sand separator vessel and cause erosion which leads to material thinning, weak spots, and eventually holes, in the sand separator vessel.

Undesirable and complex flow patterns of the sand within the replaceable insert exist causing adverse operational conditions such as the clogging of openings in the replaceable insert. The undesirable flow patterns cause sections or regions of very high sand particle velocities within the replaceable insert where the openings in the replaceable insert become overwhelmed and clog.

These adverse operational and uneven wear conditions at some point in time require the sand separator vessel to be taken offline and the replaceable insert repaired or replaced. There is a long felt need to provide a replaceable insert more readily capable of withstanding gravitational and centrifugal forces, undesirable sand flow patterns and velocities, as well as the abrasive attack of the sand moving within the replaceable insert. It is to these needs and others that the present disclosure is directed.

### BRIEF DESCRIPTION OF THE INVENTION

A perforated replaceable insert for a sand separator vessel in a digester feed system has been conceived. The conceived perforated replaceable insert reduces the uneven wear problems previously experienced. Additionally, the conceived perforated replaceable insert is capable of withstanding centrifugal forces, thereby eliminating the problems associated with the collapse of the perforated replaceable insert, i.e., the perforated replaceable insert collapsing onto itself.

In addition, a perforated replaceable insert has been conceived to provide a smooth and consistent movement of sand particles in a downward direction and through the surface of the perforated replaceable insert along the entire vertical length of the perforated replaceable insert. The smooth, consistent movement of sand particles prevents an undesirable accumulation of sand near the lower end of the insert where sand might cause clogging and sporadic movement. The smooth and consistent movement of sand particles through the perforated replaceable insert overcomes certain operational problems of a sand separator vessel.

### BRIEF DESCRIPTION OF THE DRAWINGS

FIG. 1 illustrates placement of a sand separator vessel within a digester feed system using high-pressure suspension pumps, prior art.
FIG. 2 illustrates placement of a sand separator vessel within a digester feed system using a high-pressure feeder (HPF), prior art.
FIG. 3 is a schematic of a sand separator vessel for a digester feed system, prior art.
FIG. 4 shows a holed replaceable insert for a sand separator vessel, prior art.
FIG. 5 shows the flow of material within the sand separator vessel, prior art.
FIG. 6 shows a slotted replaceable insert for a sand separator vessel, prior art.
FIG. 7 shows a perforated replaceable insert for a sand separator vessel with slots having a vertical orientation and columns of slots that are parallel to the tangent of the conical axis, according to an embodiment of the current application.
FIG. 8 shows a perforated replaceable insert for a sand separator vessel with slots having a vertical orientation and varying widths, according to an embodiment of the current application.
FIG. 9 shows a perforated replaceable insert for a sand separator vessel with slots having a vertical orientation and varying lengths, according to an embodiment of the current application.
FIG. 10 shows a perforated replaceable insert for a sand separator vessel with slots having a vertical orientation and varying lengths and widths, according to an embodiment of the current application.

### DETAILED DESCRIPTION OF THE INVENTION

The foregoing will be apparent from the following more particular description of exemplary embodiments of the disclosure, as illustrated in the accompanying drawings. The drawings are not necessarily to scale, with emphasis instead being placed upon illustrating the disclosed embodiments.

Except as otherwise expressly provided herein, the following rules of interpretation apply to this specification (i.e., written description, claims, abstract and/or drawings): (a) all words used herein shall be constructed to be of such gender or number (singular or plural) as the circumstances require; (b) the singular terms "a," "an," and "the," as used in the specification and the appended claims include plural references unless the context clearly dictates otherwise; (c) the antecedent term "about" applied to a recited range or value denotes an approximation within the deviation in the range or value known or expected in the art from the measurements method; (d) the words "herein," "hereby," "hereof," "hereto," "hereinbefore," and "hereinafter," and words of similar import, refer to this specification in its entirety and not to any particular paragraph, claim or other subdivision, unless otherwise specified; (e) descriptive headings are for convenience only and shall not control or affect the meaning or construction of any part of the specification; and (f) "or" and "any" are not exclusive and "include" and "including" are not limiting. Further, the terms "comprising," "having," "including," and "containing" are to be construed as open-ended terms (i.e., meaning including, but not limited to,") unless otherwise noted.

Although this disclosure describes in context a sand separator vessel in association with a digester feed system (also known as a fiber line feed system), it is understood that this disclosure is applicable to other separation devices where whirling action and gravitational and centrifugal forces are used to separate an entrained liquor, *i*.*e*., liquid or liquor entrained with solid particles, into a solid particle stream and a relatively clean liquid or liquor stream.

When appropriate and to provide clarity, similar reference numbers between figures are used to signify similar equipment.

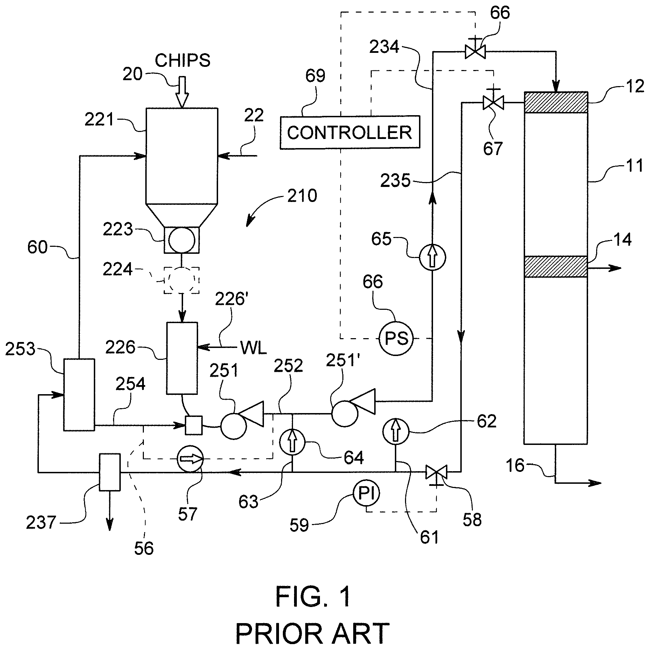

FIG. 1 illustrates a prior art digester feed system showing a recirculation loop connected to a digester or an impregnation vessel, which is known from *e.g.* U.S. Pat. No. 5,753,075. In the system of the '075 patent, chips are transferred by means of at least one, preferably two high-pressure suspension pumps **251**, **251**' for conveying the chips to the inlet of the digester **11** instead of a high-pressure feeder. It is also possible to use other pressurizing and transferring means such as high pressure feeders (HPF, well-known in the industry) in place of the high-pressure suspension pumps **251**, **251**'.

The chips **20** are introduced into a steaming vessel **221**, which receives steam through one or more steam conduits **22**. Steamed chips from the steaming vessel **221** are fed into a metering device **223**, which may be a pocketed rotor or a screw-type device or other suitable metering device.

The discharge from the metering device **223** can be sent to an isolating device **224** or can be fed directly into a conduit or chute **226**. If used, the isolating device **224** may be a pressure-isolator, such as a pocketed rotor-type isolator device (also known as a low pressure feeder) arranged between the metering device **223** and the chute **226**.

Cooking liquor (also known as white liquor, "WL") is added into the chute **226** via line **226**' so that a suspension of chips and liquor is formed (not shown). The suspension is discharged from the chute **226** via a curved outlet **250** to the inlet of the high-pressure suspension pump **251**. Typically, the suspension going to the inlet of the high-pressure suspension pump 251 is augmented with liquor coming from a liquor tank **253** through digester feed conduit **254**.

Though the embodiment illustrated in FIG. 1 has two high-pressure suspension pumps, alternatively only a single high-pressure suspension pump can be used, or two or more high-pressure suspension pumps connected in series or parallel can be used.

The pressurized and typically heated suspension is discharged from the high-pressure suspension pump **251**' to a digester feed conduit **234**. The digester feed conduit **234** conveys the suspension into the inlet of a continuous digester **11**. Excess liquor is removed from the suspension in a conventional way via a screen **12**. Extraction of black liquor from the digester **11** may also occur through screen **14**. The black liquor from screen **14** may be further processed. Cooked chips (pulp) **16** are discharged from digester **11** and processed further downstream of the high-pressure suspension pump digester feed system **210**.

The excess liquor removed from the suspension is returned to the high-pressure suspension pump digester feed system **210** via a return conduit **235**, preferably into the liquor tank **253** to be used in the formation of the suspension of chips and liquor in a conduit **250** through digester feed conduit **254**. Liquor in return conduit **235** may contain sand particles. If desired, the liquor in return conduit **235** can be conveyed through a sand separator vessel **237** designed for pressurized or non-pressurized use according to the desired operational mode.

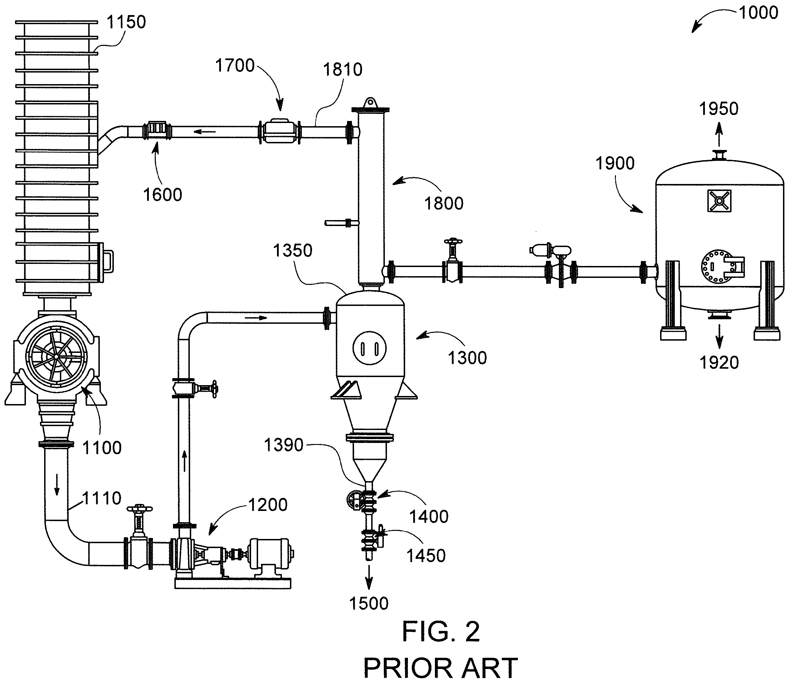

If a HPF is used in place of the high-pressure suspension pumps, returning the pressurized liquor of return conduit **235** to the inlet of the high-pressure suspension pumps **251**, **251**' is not essential for the operation of the arrangement of FIG. 1. The energy available from the flow in return conduit **235** can be used at any point in the chemical pulp mill as required. FIG. 2 illustrates a digester feed system using a HPF.

If the chute **226** is operated essentially at atmospheric pressure, the returned liquor in return conduit **235** is to be returned to essentially atmospheric pressure prior to feeding it into conduit **250**. One way of accomplishing this is to use a pressure regulation valve **58** and a pressure detector **59** in return conduit **235**.

The opening of the pressure regulation valve **58** is controlled so that a predetermined, lower pressure prevails in return conduit **235** downstream of the pressure regulation valve **58**. Additionally, the liquor tank **253** can be designed so that it operates as a "flashing tank" so that the hot pressurized liquor in return conduit **235** is quickly evaporated to be used as a steam source e.g. in steaming vessel **221** via steam conduit **60**.

Preferably the pressurized liquor in return conduit **235** is used for augmenting the flow exiting from high-pressure suspension pump **251**', through augment conduit **61** and augment conduit pump **62**. An option is to use the pressurized liquor in return conduit **235** to augment the flow between high-pressure suspension pumps **251** and **251**' in pump connector conduit **252** through pump augment conduit **63**, using or not using pump augment pump **64**. If necessary, liquor from digester feed conduit **254** may be used to augment the flow in pump connector conduit **252**. Liquor from digester feed conduit **254** may be added to pump connector conduit **252** via liquor tank augment conduit **56** and liquor tank augment pump **57**.

FIG. 1 illustrates a one-way (check) valve **65** (this valve may be a check valve or any other suitable valve) located in digester feed conduit **234**. This one-way (check) valve **65** prevents pressurized flow from returning to high-pressure suspension pump **251** or **251**'. In addition, conventional automatic (e.g. solenoid operated) inlet isolation valve **66** and return isolation valve **67** are located in digester feed conduit **234** and return conduit **235**, respectively, to isolate the digester feed conduit **234** and return conduit **235** from the rest of the high-pressure suspension pump digester feed system **210**. Digester feed conduit **234** and return conduit **235** may contain pressurized liquor.

In one mode of operation, a conventional pressure switch **68** is located downstream of high-pressure suspension pump **251**' in digester feed conduit **234**. The pressure switch **68** is used to monitor the pressure in digester feed conduit **234** so if the pressure deviates from a predetermined value, the conventional pressure controller **69** will automatically isolate digester **11** from the high-pressure suspension pump digester feed system **210**. This isolation results by automatically closing inlet isolation valve **66** and return isolation valve **67**.

FIG. 2 illustrates a section of a HPF digester feed system **1000** having a HPF **1100** connected to the sand separator vessel **1237** via low pressure outlet liquor conduit **1110.** Low pressure outlet conduit **1110** may include a chip chute pump **1200** to provide pressurization for the liquor from the HPF **1100** to be fed to the sand separator vessel **1237.** Liquor within the low pressure outlet conduit **1110** may include sand which, if not removed, causes significant damage to the process equipment (vessel, conduits, pumps, etc.) of the HPF digester feed system **1000** and the processing equipment upstream.

Liquor containing sand (entrained liquor) from the low pressure outlet conduit **1110** is introduced tangentially into the sand separator vessel **1237** near the vertical top of the vessel. By means of centrifugal forces, the sand is separated from the entrained liquor and leaves the sand separator vessel **1237** via the bottom of the sand separator vessel **1237.** The term "bottom" here means the vertically lower end of a vessel, the vessel having a top located vertically above its bottom.

Typically the sand leaves the sand separator vessel **1237** out of the bottom, passing through a ball valve **1400** and a pocket valve **1450** to disposal **1500.** Essentially sand free (cleaned) liquor **1330** is released through the top discharge **1350** and may be sent to the level tank **1900** or the in-line drainer **1800** and returned to the chip chute **1150** via low pressure liquor recirculation conduit **1810** through flow meter **1700** and check valve **1600.**

The level tank **1900** may also have a steam stream removed via a level tank top outlet **1950** to the steaming vessel (not shown). Additionally, level tank **1900** may include a level tank bottom discharge **1920** for liquor is discharged to the make-up liquor pump (not shown) elsewhere in the HPF digester feed system **1000**.

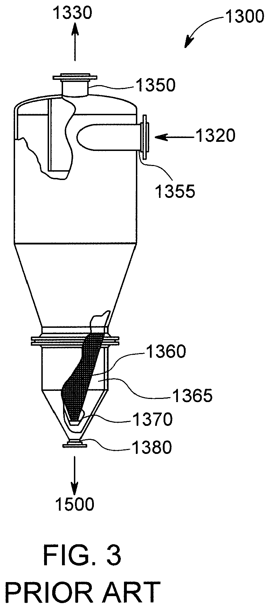

FIG. 3 shows a typical sand separator vessel **1237**. Sand separator vessel **1237** is shown as a vertically oriented mostly cylindrical vessel, having a top and a bottom. The bottom being vertically lower than the top of the vessel.

Debris laden liquor **1320** (i.e. liquor having sand particles trapped and carried along with the liquor) enters the sand separator vessel **1237** at the tangential inlet **1355**. Typically the tangential inlet **1355** is located in the vertically upper region of the sand separator vessel **1237**. Upon entering the sand separator vessel **1237**, entrained liquor **1320** is forced into a whirling motion within the sand separator vessel **1237**.

The whirling motion within the sand separator vessel **1237** causes the sand to separate from the liquor. Once separated, sand is moved by gravitational and centrifugal forces downward through the sand separator vessel **1237** through a replaceable insert **1360** in the bottom region of the sand separator vessel **1237**.

The sand, having passed through the replaceable insert **1360**, is collected in a sand collection region **1365**. The sand collection region **1365** may also be referred to as a solids particle collection region or collection region. Sand is removed from the sand separator vessel **1237** through a sand discharge **1380** and is sent to disposal **1500**.

To break or otherwise stop the whirling motion of the sand prior to discharge through the sand discharge **1380**, the whirling sand is sent through a vortex breaker **1370**. The vortex breaker **1370** may have a replaceable insert **1360**, or may be attached to the replaceable insert **1360** at the discharge end of the replaceable insert **1360**.

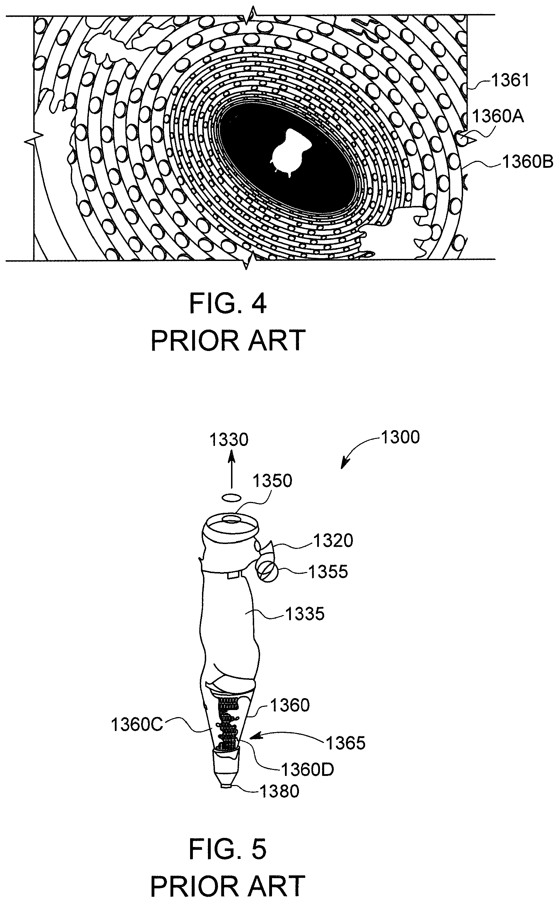

FIG. 4 shows a conventional holed replaceable insert **1361**, *i*.*e*., a replaceable insert with holes of conventional design. The conventional holed replaceable insert **1361** is comprised of a metal plate shaped to fit within the vertically lower region of a sand separator vessel **1237.** Circular holes **1360A** are made in the metal plate and have land areas **1360B** between the holes **1360A**.

The holes **1360A** are located about the entire surface of the conventional holed replaceable insert **1361** and are of a single size sufficient to allow the sand to pass through the holes **1360A** from the interior of the conventional holed replaceable insert **1361** surface to the sand collection region **1365** (shown in FIG. 3) surrounding the replaceable insert **1360** (shown in FIG. 3). The holes **1360A** are typically 3/8 inch diameter on 1 inch spacings, and are small enough to prevent any chips from either passing through or becoming lodged in the hole **1360A**, but are large enough for sand to pass through. The location of the holes is not determined by a specific pattern. Sand is collected in the sand collection region **1365** for discharge from the sand separator vessel **1237**.

FIG. 5 shows a typical sand separator vessel **1237**. Debris laden liquor **1320** enters the sand separator vessel **1237** near the vertical top of the vessel through the tangential inlet **1355**. The whirling mass of sand **1335** is shown moving vertically downward within the sand separator vessel **1237** A conventional replaceable insert **1360** is shown with vertical slots **1360C** in the metal plate and land areas **1360B** between the vertical slots **1360C.**

Sand accumulates within the sand collection region **1365** prior to passing through the sand discharge **1380**. Essentially sand free (cleaned) liquor **1330** is removed through the top discharge **1350** of the sand separator vessel **1237**.

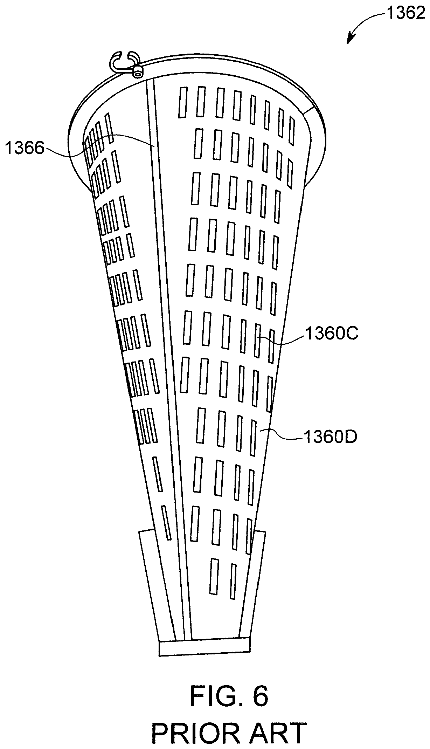

FIG. 6 shows a conventional slotted replaceable insert **1362,** as depicted in FIG. 5. Also shown in FIG. 6 are the vertical slots **1360C** and the land areas **1360B** between the vertical slots **1360C**. Vertical slots **1360C** typically have a width dimension of 8 mm and a length of 72 mm.

A vertical slot **1360C** width of 8 mm allows the cross section of the slot to be reduced by 20%, when compared to the diameter of the holes **1360A**. Such a reduction in width dimension is desirable to prevent the passage of chips through the vertical slot **1360C** or blockage of the vertical slots **1360C** by chips.

A vertical slot **1360C** length of 72 mm allows the vertical slots **1360C** to be reduced in number (compared to holes **1360A**), thereby increasing the distance between vertical slots **1360C** (the distance between the vertical slots **1360C** is measured center line to center line of the vertical slots **1360C**). By increasing the distance between vertical slots **1360C**, the conventional slotted replaceable insert **1362** has more sufficient land area **1360D** (also referred to as blank area) than exists in conventional holed replaceable inserts **1361**. It is important to increase the land area **1360D** of the replaceable insert to obtain a conventional slotted replaceable insert **1362** less susceptible to erosion than the conventional holed replaceable insert **1361**.

The manufacturing process of both the conventional holed replaceable insert **1361** and the conventional slotted replaceable insert **1362** requires use of a flat piece of metal plate. While flat, the openings, holes, or slots, are made in the metal plate without any specific pattern or arrangement.

Once the openings are made, the metal plate is formed into the replaceable insert **1360**. Where the ends of the metal plate meet, a seam **1366** exists. The seam **1366** may be formed by welding the metal ends together or another acceptable method may be used to attach and secure the metal end pieces to each other.

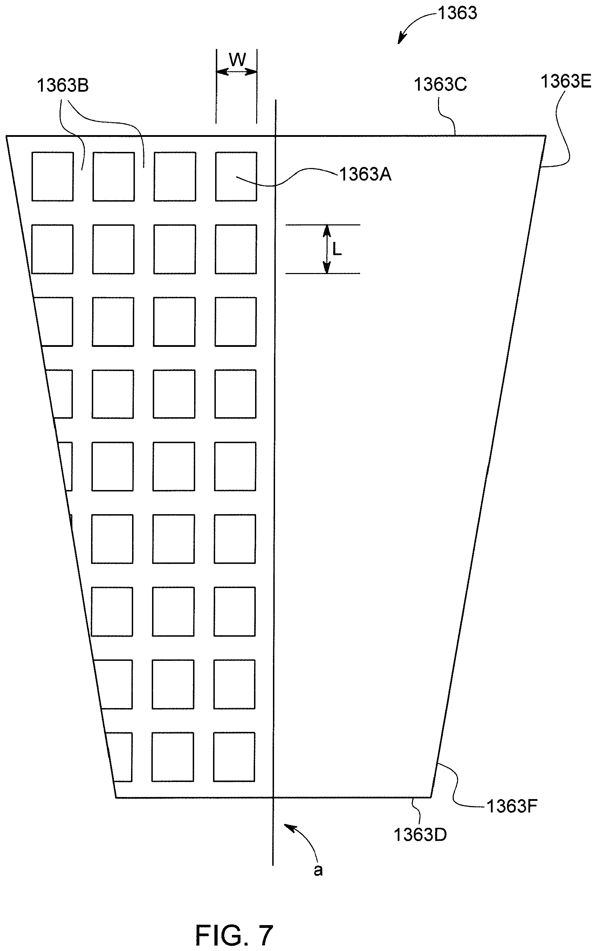

FIG. 7 shows a perforated replaceable insert **1363** according to an embodiment of this disclosure. The perforations of the perforated replaceable insert **1363** are vertical slots **1363A**. The vertical slots **1363A** are positioned in columns and rows on the perforated replaceable insert **1363**.

Orientation of the columns of vertical slots **1363A** may be parallel to line "a" such that the line "a" is the tangent of the conical axis of the perforated replaceable insert **1363**. This parallel orientation is necessary for sand removal through the vertical slots **1363A** as the sand moves in a whirling motion based on the conical shape of the perforated replaceable insert **1363**. By having the vertical slots **1363A** align in columns parallel to line "a," the centrifugal force imparted on the sand passing the vertical slots **1363A** will direct the sand into the vertical slots **1363A**.

The centrifugal forces acting on the sand provide a pattern of flow of the sand within the slotted replaceable insert. By recognizing the pattern of flow of the sand and locating the vertical slots **1363A** in the pattern following the pattern of the centrifugal forces the individual sand particles are moved to the vertical slots **1363A** by the centrifugal force existing in the sand separator. By providing vertical slots **1363A** in the suggested pattern, more sand will fall into the openings rather than hitting the surface of the metal. Sand hitting the surface of the metal results in wear of the metal. The vertical slots **1363A**, provided in the suggested pattern results in an extension of the life of the perforated replaceable insert **1363**.

Columns of vertical slots **1363A** extend in a vertical line from essentially the top **1363C** of the perforated replaceable insert **1363** to the bottom **1363D**. The vertical slots **1363A** may all be of the same length "L" and width "W" throughout the perforated replaceable insert. Typically, the width "W" of the vertical slots **1363A** is 6 mm or less, for example 4 mm or 2 mm, to prevent wood pieces, pulp fibers, or matter other than sand from passing through the slots. Vertical slots **1363A** typically have a length "L" being no more than 72 mm. The measurements of the length and width or the ratio of length to width should be suitable to prevent wood pieces, pulp fibers, or matter other than sand from passing through the slots. For example, one such advantageous ratio of length to width may be 12:1, or a length of 48 mm and a width of 4 mm. As another example, a length of 36 mm and width of 3 mm can be used, such that the length of a slot may be set using a desired width, based on the raw material to the digester feed system, such that wood pieces, pulp fiber, or matter other than sand are prevented from passing through the slots. By maintaining the width "W" below 6 mm, less pin chips or fins are removed with the sand from the entrained liquor.

It is desirable to separate the sand from the entrained liquor while maintaining the pin chips and fines within the entrained liquor. A vertical slot **1363A** having a width of 6 mm or less, for example 4 mm or less, or 2 mm or less, will prevent the pin chips and fines from passing through or blocking the vertical slots **1363A** with the sand particles. In one embodiment, a vertical slot **1363A** having a width of no more than 6 mm is used along with a correspondingly desirable vertical slot **1363A** size where the vertical slot **1363A** allows for sand to pass through and allows for sufficient rows and columns of slots to provide the needed open space for the passage of sand.

In one exemplary embodiment, a vertical slot **1363A** has a width of no more than 6 mm and a length of no more than 72 mm, or a corresponding ratio, and the sand collection region **1365** is protected from the less desirable chip pins and fines passing through the vertical slots **1363A** and into the sand collection region **1365**. Chip pins and fines are particles which have been processed through a digester or impregnator and contain abrasive cooking liquor within the particles. It is desirable for the chip pins and fines to remain with the essentially sand free (cleaned) liquor portion of the separated entrained liquor and to return to the process for further treatment. Reducing the passage of chip pins and fines into the sand collection region **1365**, provides additional space for sand collection as well as reduces the likelihood of possible corrosion of the sand separator vessel **237** or **1237** within a digester feed system as shown in FIGs. 1 and 2, from liquor within the chip pins and fines.

Between the vertical slots **1363A** are land areas **1363B**. Land areas **1363B** are necessary to provide structural support for the perforated replaceable insert **1363.** Land areas may **1363B** comprise between about 75% to about 95%, of the surface area of the metal to provide sufficient structural support and prevent the perforated replaceable insert from collapsing in on itself. Providing sufficient structural support by the use of the land areas **1363B**, results in increased life of the perforated replaceable insert **1363.** Additionally, a high percentage of land area **1363B** enhances the protection of the sand collection region **1365** by reducing or eliminating the likelihood of the perforated replaceable insert **1363** collapsing.

Additionally, the metal plates used to form the perforated replaceable insert may wear unevenly due to the abrasive nature of sand. To overcome the uneven wear pattern experienced by a conventional replaceable insert, one embodiment of the perforated replaceable insert of the present disclosure comprises a hard coating applied to the metal plate surface, and another embodiment comprises a metal plate having an increased thickness.

The top of the metal plate, for example, the top 20% to 40%, 25% to 35%, 20% to 30%, or even 25% to 30% of the metal plate, may be treated with a hard coating such as tungsten carbide or other suitable material prior to installation. ("Top," in this instance, refers to the widest part of the metal portion at the inlet of the perforated replaceable insert). The hard coating layer ideally does not exceed 0.3 mm in thickness. An example of a suitable process to apply the hard coating is a High Velocity Oxygen Fuel (HVOF) coating process where melted material is sprayed on the surface of the metal plate.

If a hard coating is not used, it is also possible to construct the top of the metal plate, for example, the top 20% to 40%, 25% to 35%, 20% to 30%, or even 25% to 30% of the metal plate with a thicker metal plate, such as 10%, 15%, or 20% thicker, or 2 mm to 8 mm thicker, or 4 mm to 6 mm thicker, for example, than the remaining metal plate.

Regardless of whether a hard coating or thicker metal plate is used, while the rate of metal wear may not be reduced over conventional replaceable inserts, life of the replaceable insert will be extended because uneven wear of the metal plate may be avoided.

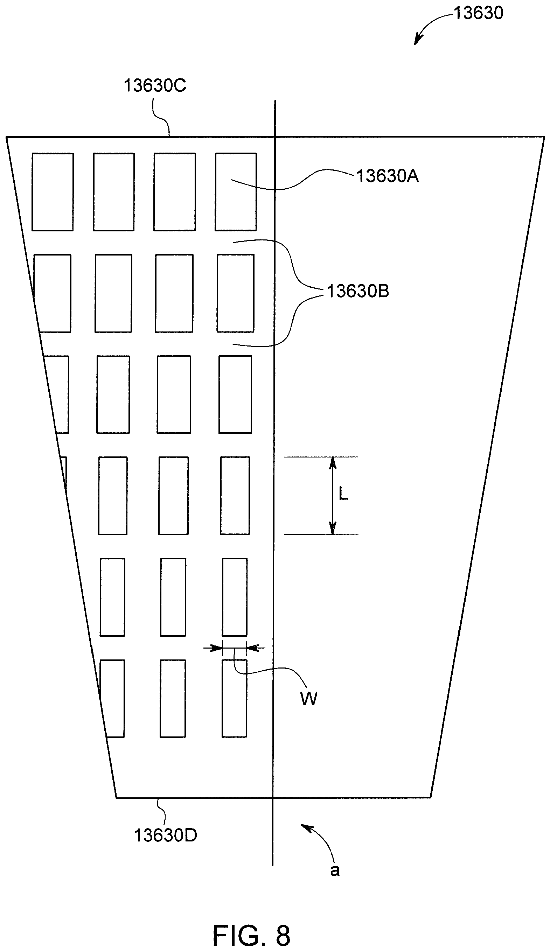

FIG. 8 shows a perforated replaceable insert **13630** according to another embodiment of this disclosure. The perforations of the perforated replaceable insert **13630** are vertical slots **13630A** with land areas **13630B** between the vertical slots **13630A**. The vertical slots **13630A** are positioned in columns and rows on the perforated replaceable insert **13630**.

As with vertical slots **1363A** of FIG. 7, vertical slots **13630A** may be arranged parallel to a line "a" such that the line "a" is the tangent of the conical axis of the perforated replaceable insert **13630**. Similarly to vertical slots **1363A** of FIG. 7, vertical slots **13630A** of FIG. 8 have essentially the same length "L," Unlike FIG. 7, vertical slots **13630A** of FIG. 8 do not all have the same width "W."

As the sand moves vertically downward through the perforated replaceable insert **13630** from the top **13630C** to the bottom **13630D**, the widths "W" of the vertical slots **13630A** change. This change may be a wider width "W" at the top **13630C** and a narrower width "W" at the bottom **13630D** (as shown in FIG. 8). It is also possible for the change in the width "W" of the vertical slots **13630A** to gradually change as the sand moves vertically downward, such that the width "W" may not change from row to row or within each row.

In another embodiment the gradual change of the width "W" may occur in sets of rows, for example the first three rows may be a set of rows and the width "W" for each vertical slot **13630A** in such set may be the same. Each vertical slot **13630A** in a second set of rows, vertically below the first set of rows, may have a different width "W" than the previous set of rows. Other sets of rows may follow and have different widths "W" from the previous set of rows.

In another embodiment, rows of vertical slots **13630A** gradually change in width "W" such that the widest vertical slots are at the bottom (rather than the top) and the top row of vertical slots has the narrowest vertical width "W."

Varying the width "W" of the vertical slots may positively impact the sand removal efficiency as larger (or in this case wider) slots are used to offset the velocity and concentration of sand to be removed. Positioning narrower slots near the top of the perforated replaceable insert **13630** where the concentration and velocity of sand is highest may also positively impact removal of sand.

In the case of gradually changing vertical slot width "W" dimension, the largest width "W" should not exceed about 6 mm and the smallest width "W" dimension should not be less than 1 mm. A width "W" dimension as suggested will allow wood pieces, pin chips, fines, or matter other than sand from passing through the vertical slot.

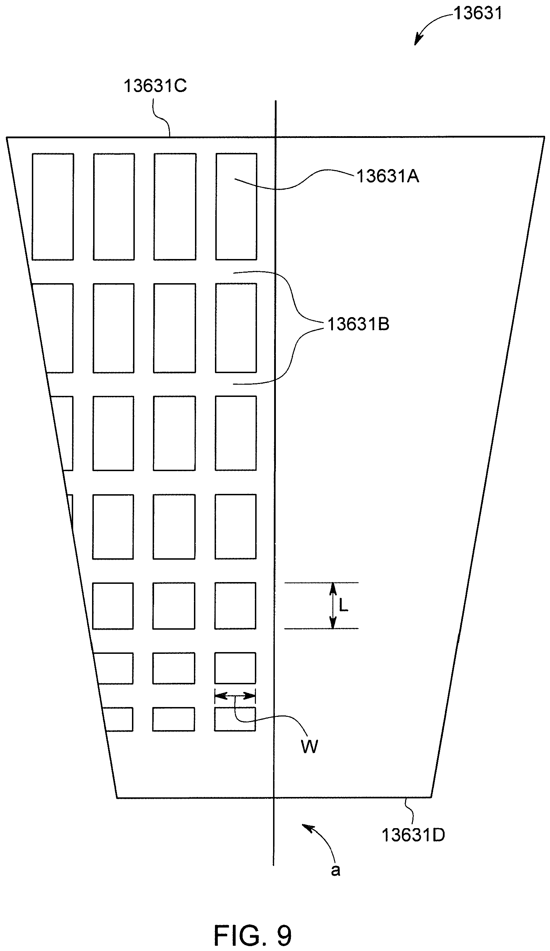

FIG. 9 shows a perforated replaceable insert **13631** according to another embodiment of this disclosure. The perforations of the perforated replaceable insert **13631** are vertical slots **13631A** with land areas **13631B** between the vertical slots **13631A.** The vertical slots **13631A** are positioned in columns and rows on the perforated replaceable insert **13631.**

As with vertical slots **1363A** of FIG. 7, vertical slots **13631A** may be arranged parallel to a line "a" such that the line "a" is the tangent of the conical axis of the perforated replaceable insert **13631.** Similarly to vertical slots **1363A** of FIG. 7, vertical slots **13631A** of FIG. 9 may have essentially the same width "W." Unlike FIG. 7, vertical slots **13631A** of FIG. 9 do not all have the same length "L."

As sand moves vertically downward through the perforated replaceable insert **13631** from the top **13631C** to the bottom **13631D**, the length "L" of the vertical slots **13631A** changes. This change may be longer length "L" at the top **13631C** and shorter length "L" at the bottom **13631D** (as shown in FIG. 9) of the perforated replaceable insert **13631**. It is also possible that the change in the length "L" as the sand moves vertically downward is a gradual change and may not be made in each row.

In another embodiment, the gradual change of the length "L" may occur in sets of rows, for example the first two rows may be a set of rows and the length "L" for each vertical slot **13631A** may be the same. Each vertical slot **13631A** in a second set of rows, vertically below the first set of rows, may have a different length "L" than the previous set of rows. Other sets of rows may follow and have different lengths "L" from the previous set of rows.

In another embodiment, rows of vertical slots **13631A** change gradually in length "L" such that the longest vertical slots are at the bottom (rather than the top) and the top row of vertical slots has the shortest vertical length "L."

Varying the length "L" of the vertical slots may positively impact the sand removal efficiency as larger (or in this case vertically longer) vertical slots are positioned where the highest concentration of sand to be removed exists. In the case of gradually changing vertical slot length "L" dimension, the largest length should not exceed about 100 mm and the smallest "L" dimension should not be less than 5 mm. For example, a maximum length of 50 mm and a minimum length of 10 mm would be suitable. These ranges of length "L" dimensions will prevent passage of wood chips, pin chips, fines, pulp fibers or other matter other than sand from passing through the vertical slot.

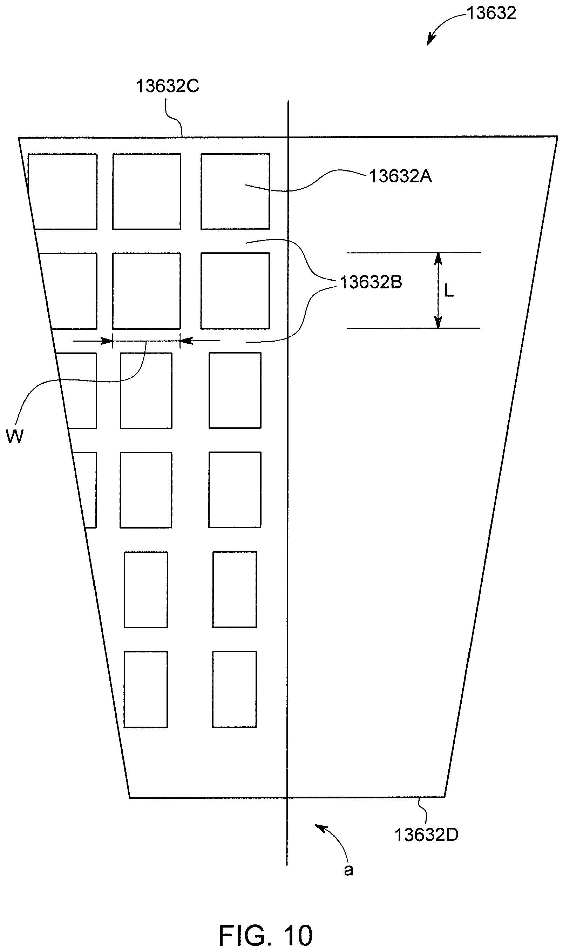

FIG. 10 shows a perforated replaceable insert **13632** according to another embodiment of this disclosure. The perforations of the perforated replaceable insert **13632** are vertical slots **13632A** and have land areas **13632B** between the vertical slots **13632A.** The vertical slots **13632A** are positioned in columns and rows on the perforated replaceable insert **13632.**

As with vertical slots **1363A** of FIG. 7, vertical slots **13632A** may be arranged parallel to a line "a" such that the line "a" is the tangent of the conical axis of the perforated replaceable insert **13632**. Unlike vertical slots **1363A** of FIG. 7, vertical slots **13632A** of FIG. 10 do not have essentially the same width "W" or length "L."

As sand moves vertically downward through the perforated replaceable insert **13632** from the top **13632C** to the bottom **13632D**, both the length "L" and width "W" of the vertical slots **13632A** change. This change may be longer length "L" and wider width "W" at the top **13632C** and shorter length "L" and narrower width "W" at the bottom **13632D** (as shown in FIG. 10) of the perforated replaceable insert **13632**. In some embodiments the change in the length "L" and width "W" as the sand moves vertically downward is a gradual change and may not be made in each row. In another embodiment the gradual change of the length "L" and width "W" may occur in sets of rows, for example the first two rows may be a set of rows and the length "L" and width "W" for each vertical slot **13632A** may be the same. Each vertical slot **13632A** in a second set of rows, vertically below the first set of rows, may have a different length "L" and width "W" than the previous set of rows. Other sets of rows may follow and have different lengths "L" and widths "W" from the previous set of rows.

In some embodiments rows of vertical slots **13632A** have a gradual change in the length "L" and width "W" such that the longest and widest vertical slots are at the bottom (rather than the top) and the top row of vertical slots has the shortest and narrowest vertical slot dimension.

While not shown in any of FIGs. 7 to 10, it is also possible for the rows and columns of vertical slots to have an angle, relative to line "a," of 15 degrees to 185 degrees, for example: 30 degrees to 150 degrees, 45 degrees to 135 degrees, 60 degrees to 120 degrees, 15 degrees to 60 degrees or even 120 degrees to 185 degrees would be suitable. The range of angles chosen corresponds with the flow pattern of the sand as it moves vertically downward in the sand separator vessel. The flow pattern of the sand is a function of multiple factors: the dimensions of the sand separator vessel, the volume of entrained liquor entering the sand separator vessel, and the concentration of sand in the entrained liquor. By observing the flow of sand downward through the sand separator vessel, the angle can be set. The angle used would depend on the dimensions of the region and the volume of entrained liquid fed to the vessel.

Presented in this disclosure is: a sand separator vessel to separate entrained liquor into solid particles (essentially sand) and an essentially sand free (cleaned) liquor stream. The sand separator vessel comprises at least an upper section of the cylindrical portion and at least a lower section; a tangential inlet to the upper section of the cylindrical portion to accept the entrained liquor; an outlet at the top of the cylindrical portion to discharge the essentially sand free (cleaned) liquor; an outlet at the bottom of the lower section to discharge the solid particles; the lower section having a conical portion. The conical potion has a conically shaped replaceable insert surrounded by a solids particle collection region. The conically shaped replaceable insert is a metal plate with perforations formed into a conical shape sized to fit within the conical portion of the lower section. Perforations in the metal plate are slots having a length "L" and a width "W." The slots are arranged in a pattern of rows and columns such that the columns of slots are parallel to a line formed by the tangent of the conical axis of the replacement insert.

In at least some embodiments, the slots have a gradually changing width "W," a gradually changing slot length "L," a gradually changing slot width "W," and a gradually changing slot length "L."

Presented in this disclosure is a perforated replaceable insert for a separation device. The perforated replaceable insert for the separation device comprises: a metal plate having a conical shape. The conical shape has a larger opening at one end and a smaller opening at the opposite end. Multiple perforations are in the conically shaped metal plate. Each of the multiple perforations has a length "L" and a width "W," the length "L" and width "W" may be different from each other. The multiple perforations may also be slots. The multiple perforations form a pattern of columns and rows in the metal plates; wherein the columns are all placed in a metal plate and the columns of perforations are parallel to a line formed by the tangent of the conical axis of the replacement insert.

In at least some embodiments, the perforated replaceable insert is suitable for use in a sand separator vessel. Additionally, in some embodiments the width "W" of the perforations gradually changes from one end of the replaceable insert to the opposite end of the replaceable insert while the length "L" does not change. In some embodiments, the width "W" of the multiple perforations is no more than 6 mm.

Some embodiments of the perforated replaceable insert may have a hard coating applied to 25% to 30% of the top **1363C**, **13630C**, **13631C**, **13632C** end of the conically shaped metal plate where the formed replaceable insert has a larger opening compared to the bottom **1363D**, **13630D**, **13631D**, **13632D**. In at least some embodiments, the conically shaped metal plate is thicker at the end where the conically shaped metal plate has the larger opening.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the scope of the invention as defined by the appended claims.

## Claims

1. A sand separator vessel to separate entrained liquor into solid particles and an essentially solid particles free liquor stream, comprising:
at least an upper section of a cylindrical portion and at least a lower section;
a tangential inlet to the upper section of the cylindrical portion to accept the entrained liquor;
an outlet at the top of the upper section of the cylindrical portion to discharge an essentially solid particles free liquor;
an outlet at the bottom of the lower section to discharge the solid particles;
the lower section having a conical portion;
the conical portion having a conically shaped replaceable insert (1363, 13630, 13631, 13632) surrounded by a solid particles collection region;
wherein the conically shaped replaceable insert (1363, 13630, 13631, 13632) is a metal plate with perforations in the metal plate, and the metal plate is formed into a conical shape sized to fit within the conical portion of the lower section;
**characterized in that**
the perforations in the metal plate are slots (1363A, 13630A, 13631A, 13632A) having a length (L) and a width (W); and
the slots (1363A, 13630A, 13631A, 13632A) are arranged in a pattern of rows and columns such that the columns of slots (1363A, 13630A, 13631A, 13632A) are parallel to a line formed by the tangent of the conical axis of the replaceable insert (1363, 13630, 13631, 13632).

2. The sand separator vessel of claim 1, wherein the slots (1363A, 13630A, 13631A, 13632A) have a gradually changing width (W) .

3. The sand separator vessel of claim 1 or 2, wherein the slots (1363A, 13630A, 13631A, 13632A) have a gradually changing length (L).

4. The sand separator vessel of any one of claims 1 to 3, wherein the replaceable insert (1363, 13630, 13631, 13632) has a hard coating applied to the top 25% to 30% of the replaceable insert (1363, 13630, 13631, 13632).

5. The sand separator vessel of any one of claims 1 to 3, wherein the metal plate of the replaceable insert (1363, 13630, 13631, 13632) has an increased thickness for the top 25% to 30% of the replaceable insert (1363, 13630, 13631, 13632).

6. The sand separator vessel of claim 5, wherein the top 25% to 30% of the metal plate is 2 mm to 8 mm thicker than the remaining metal plate.

7. The sand separator vessel of claim 5, wherein the thickness of the metal plate is increased by 10% to 20%.

8. The sand separator vessel of any one of the preceding claims, wherein the maximum width of the slots (1363A, 13630A, 13631A, 13632A) is 6 mm.

9. A perforated replaceable insert (1363, 13630, 13631, 13632) for a separation device, the insert comprising:
a metal plate having a conical shape, wherein the conical shape has a larger opening at one end and a smaller opening at the opposite end, and
multiple perforations in the conically shaped metal plate,
**characterized in that**
each of the multiple perforations has at least a length (L) and a width (W), and the multiple perforations form a pattern of columns and rows in the metal plate, wherein the columns are all placed in the metal plate and the columns of perforations are parallel to a line formed by the tangent of the conical axis of the replaceable insert (1363, 13630, 13631, 13632).

10. The perforated replaceable insert (1363, 13630, 13631, 13632) of claim 9, wherein said insert is suitable for use in a sand separator vessel, particularly a sand separator vessel according to any one of claims 1 to 8.

11. The perforated replaceable insert (1363, 13630, 13631, 13632) of claim 9 or 10, wherein the perforations are slots (1363A, 13630A, 13631A, 13632A).

12. The perforated replaceable insert (1363, 13630, 13631, 13632) of any one of claims 9 to 11, wherein the width (W) of the perforations gradually changes from one end to the opposite end while the length (L) does not change.

13. The perforated replaceable insert (1363, 13630, 13631, 13632) of any one of claims 9 to 12, wherein a hard coating is applied to 25% to 30% of the conically shaped metal plate at the end having the larger opening.

14. The perforated replaceable insert (1363, 13630, 13631, 13632) of any one of claims 9 to 13, wherein the conically shaped metal plate is thicker at the end having the larger opening.

15. The perforated replaceable insert (1363, 13630, 13631, 13632) of any one of claims 9 to 14, wherein the width (W) of the perforations is no greater than 6 mm.

## Patentansprüche

1. Sandabscheidegefäß zum Abtrennen mitgerissener Flotte in Feststoffteilchen und einen im Wesentlichen von Feststoffteilchen freien Flottenstrom, umfassend:
mindestens ein oberes Teilstück eines zylindrischen Abschnitts und mindestens ein unteres Teilstück;
einen tangentialen Einlass für das obere Teilstück des zylindrischen Abschnitts zur Annahme der mitgerissenen Flotte;
einen Auslass am Oberen des oberen Teilstücks des zylindrischen Abschnitts zur Ausgabe einer im Wesentlichen von Feststoffteilchen freien Flotte;
einen Auslass am Unteren des unteren Teilstücks zur Ausgabe der Feststoffteilchen;
wobei das untere Teilstück einen konischen Abschnitt aufweist;
wobei der konische Abschnitt einen konisch geformten auswechselbaren Einsatz (1363, 13630, 13631, 13632), umgeben von einer Feststoffteilchensammelregion, aufweist;
wobei der konisch geformte auswechselbare Einsatz (1363, 13630, 13631, 13632) eine Metallplatte mit Perforierungen in der Metallplatte ist und die Metallplatte zu einer konischen Form ausgebildet ist, die so bemessen ist, um in den konischen Abschnitt des unteren Teilstücks zu passen;
**dadurch gekennzeichnet, dass**
die Perforierungen in der Metallplatte Schlitze (1363A, 13630A, 13631A, 13632A) sind, die eine Länge (L) und eine Breite (W) aufweisen; und
die Schlitze (1363A, 13630A, 13631A, 13632A) zu einem Muster von Zeilen und Spalten angeordnet sind, sodass die Spalten von Schlitzen (1363A, 13630A, 13631A, 13632A) parallel zu einer Linie sind, die durch die Tangente der konischen Achse des auswechselbaren Einsatzes (1363, 13630, 13631, 13632) gebildet wird.

2. Sandabscheidegefäß nach Anspruch 1, wobei die Schlitze (1363A, 13630A, 13631A, 13632A) eine sich allmählich ändernde Breite (W) aufweisen.

3. Sandabscheidegefäß nach Anspruch 1 oder 2, wobei die Schlitze (1363A, 13630A, 13631A, 13632A) eine sich allmählich ändernde Länge (L) aufweisen.

4. Sandabscheidegefäß nach einem der Ansprüche 1 bis 3, wobei der auswechselbare Einsatz (1363, 13630, 13631, 13632) eine harte Beschichtung, aufgetragen auf die oberen 25 % bis 30 % des auswechselbaren Einsatzes (1363, 13630, 13631, 13632), aufweist.

5. Sandabscheidegefäß nach einem der Ansprüche 1 bis 3, wobei die Metallplatte des auswechselbaren Einsatzes (1363, 13630, 13631, 13632) eine erhöhte Dicke für die oberen 25% bis 30% des auswechselbaren Einsatzes (1363, 13630, 13631, 13632) aufweist.

6. Sandabscheidegefäß nach Anspruch 5, wobei die oberen 25% bis 30% der Metallplatte 2 mm bis 8 mm dicker als die übrige Metallplatte sind.

7. Sandabscheidegefäß nach Anspruch 5, wobei die Dicke der Metallplatte um 10% bis 20% erhöht ist.

8. Sandabscheidegefäß nach einem der vorstehenden Ansprüche, wobei die maximale Breite der Schlitze (1363A, 13630A, 13631A, 13632A) 6 mm ist.

9. Perforierter auswechselbarer Einsatz (1363, 13630, 13631, 13632) für eine Abscheidevorrichtung, wobei der Einsatz umfasst:
eine Metallplatte mit einer konischen Form, wobei die konische Form an einem Ende eine größere Öffnung und am entgegengesetzten Ende eine kleinere Öffnung aufweist, und
mehrere Perforierungen in der konisch geformten Metallplatte,
**dadurch gekennzeichnet, dass**
jede der mehreren Perforierungen mindestens eine Länge (L) und eine Breite (W) aufweist, und die mehreren Perforierungen ein Muster von Spalten und Zeilen in der Metallplatte bilden, wobei die Spalten alle in der Metallplatte platziert sind und die Spalten von Perforierungen parallel zu einer Linie sind, die durch die Tangente der konischen Achse des auswechselbaren Einsatzes (1363, 13630, 13631, 13632) gebildet wird.

10. Perforierter auswechselbarer Einsatz (1363, 13630, 13631, 13632) nach Anspruch 9, wobei der Einsatz zur Verwendung in einem Sandabscheidegefäß, insbesondere einem Sandabscheidegefäß nach einem der Ansprüche 1 bis 8, geeignet ist.

11. Perforierter auswechselbarer Einsatz (1363, 13630, 13631, 13632) nach Anspruch 9 oder 10, wobei die Perforierungen Schlitze (1363A, 13630A, 13631A, 13632A) sind.

12. Perforierter auswechselbarer Einsatz (1363, 13630, 13631, 13632) nach einem der Ansprüche 9 bis 11, wobei die Breite (W) der Perforierungen sich allmählich von einem Ende zu dem entgegengesetzten Ende ändert, während sich die Länge (L) nicht ändert.

13. Perforierter auswechselbarer Einsatz (1363, 13630, 13631, 13632) nach einem der Ansprüche 9 bis 12, wobei eine harte Beschichtung auf 25% bis 30% der konisch geformten Metallplatte an dem Ende, das die größere Öffnung aufweist, aufgetragen ist.

14. Perforierter auswechselbarer Einsatz (1363, 13630, 13631, 13632) nach einem der Ansprüche 9 bis 13, wobei die konisch geformte Metallplatte an dem Ende, das die größere Öffnung aufweist, dicker ist.

15. Perforierter auswechselbarer Einsatz (1363, 13630, 13631, 13632) nach einem der Ansprüche 9 bis 14, wobei die Breite (W) der Perforierungen nicht größer als 6 mm ist.

## Revendications

1. Cuve de séparateur de sable pour séparer une liqueur entraînée en particules solides et en un courant de liqueur sensiblement exempt de particules solides, comprenant:
au moins une section supérieure d'une partie cylindrique et au moins une section inférieure ;
une entrée tangentielle dans la section supérieure de la partie cylindrique pour accepter la liqueur entraînée ;
une sortie au sommet de la section supérieure de la partie cylindrique pour décharger une liqueur sensiblement exempte de particules solides ;
une sortie au fond de la section inférieure pour décharger les particules solides ;
la section inférieure ayant une partie conique ;
la partie conique ayant un insert remplaçable de forme conique (1363, 13630, 13631, 13632) entouré d'une région collectrice de particules solides ;
dans laquelle l'insert remplaçable de forme conique (1363, 13630, 13631, 13632) est une plaque métallique avec des perforations dans la plaque métallique et la plaque métallique est formée en forme conique calibrée pour s'ajuster dans la partie conique de la section inférieure ;
**caractérisée en ce que** :
les perforations dans la plaque métallique sont des fentes (1363A, 13630A, 13631A, 13632A) ayant une longueur (L) et une largeur (W) ; et
les fentes (1363A, 13630A, 13631A, 13632A) sont agencées dans un motif de rangées et de colonnes de sorte que les colonnes de fentes (1363A, 13630A, 13631A, 13632A) soient parallèles à une ligne formée par la tangente de l'axe conique de l'insert remplaçable (1363, 13630, 13631, 13632).

2. Cuve de séparateur de sable selon la revendication 1, dans laquelle les fentes (1363A, 13630A, 13631A, 13632A) ont une largeur (W) qui varie graduellement.

3. Cuve de séparateur de sable selon la revendication 1 ou 2, dans laquelle les fentes (1363A, 13630A, 13631A, 13632A) ont une longueur (L) qui varie graduellement.

4. Cuve de séparateur de sable selon l'une quelconque des revendications 1 à 3, dans laquelle l'insert remplaçable (1363, 13630, 13631, 13632) a un revêtement dur appliqué aux 25% à 30% supérieurs de l'insert remplaçable (1363, 13630, 13631, 13632).

5. Cuve de séparateur de sable selon l'une quelconque des revendications 1 à 3, dans laquelle la plaque métallique de l'insert remplaçable (1363, 13630, 13631, 13632) a une épaisseur accrue pour les 25% à 30% supérieurs de l'insert remplaçable (1363, 13630, 13631, 13632).

6. Cuve de séparateur de sable selon la revendication 5, dans laquelle les 25% à 30 % supérieurs de la plaque métallique sont de 2 mm à 8 mm plus épais que la plaque métallique restante.

7. Cuve de séparateur de sable selon la revendication 5, dans laquelle l'épaisseur de la plaque métallique est accrue de 10 % à 20 %.

8. Cuve de séparateur de sable selon l'une quelconque des revendications précédentes, dans laquelle la largeur maximale des fentes (1363A, 13630A, 13631A, 13632A) est de 6 mm.

9. Insert perforé remplaçable (1363, 13630, 13631, 13632) pour un dispositif de séparation, l'insert comprenant :
une plaque métallique ayant une forme conique, dans laquelle la forme conique a une ouverture plus grande à une extrémité et une ouverture plus petite à l'extrémité opposée, et
de multiples perforations dans la plaque métallique de forme conique,
**caractérisé en ce que** :
chacune des multiples perforations a au moins une longueur (L) et une largeur (W), et les multiples perforations forment un motif de colonnes et de rangées dans la plaque métallique, dans laquelle les colonnes sont toutes placées dans la plaque métallique et les colonnes de perforations sont parallèles à une ligne formée par la tangente de l'axe conique de l'insert remplaçable (1363, 13630, 13631, 13632).

10. Insert perforé remplaçable (1363, 13630, 13631, 13632) selon la revendication 9, dans lequel ledit insert convient à une utilisation dans une cuve de séparateur de sable, en particulier une cuve de séparateur de sable selon l'une quelconque des revendications 1 à 8.

11. Insert perforé remplaçable (1363, 13630, 13631, 13632) selon la revendication 9 ou 10, dans lequel les perforations sont des fentes (1363A, 13630A, 13631A, 13632A).

12. Insert perforé remplaçable (1363, 13630, 13631, 13632) selon l'une quelconque des revendications 9 à 11, dans lequel la largeur (W) des perforations varie graduellement d'une extrémité à l'extrémité opposée tandis que la longueur (L) ne varie pas.

13. Insert perforé remplaçable (1363, 13630, 13631, 13632) selon l'une quelconque des revendications 9 à 12, dans lequel un revêtement dur est appliqué à 25 % à 30 % de la plaque métallique de forme conique à l'extrémité ayant la plus grande ouverture.

14. Insert perforé remplaçable (1363, 13630, 13631, 13632) selon l'une quelconque des revendications 9 à 13, dans lequel la plaque métallique de forme conique est plus épaisse à l'extrémité ayant l'ouverture la plus grande.

15. Insert perforé remplaçable (1363, 13630, 13631, 13632) selon l'une quelconque des revendications 9 à 14, dans lequel la largeur (W) des perforations n'est pas supérieure à 6 mm.
